# EUROPEAN PATENT SPECIFICATION

(11) **EP 2 095 653 B1**
(45) Date of publication and mention of the grant of the patent: **28.08.2019**
(21) Application number: 07846975.6
(22) Date of filing: 03.12.2007
(51) Int. Cl.: H04L 29/06, H04W 8/24, H04W 28/18, H04W 8/26, H04W 12/06, H04W 88/02

(54) **CONFIGURING A MEMORY FOR USE IN A MOBILE APPLIANCE**
KONFIGURIEREN EINES SPEICHERS FÜR DIE VERWENDUNG IN EINEM MOBILEN GERÄT
CONFIGURATION D'UNE MÉMOIRE DESTINÉE À ÊTRE UTILISÉE DANS UN APPAREIL MOBILE

(30) Priority: 20.12.2006 US 876272 P; 20.12.2006 US 876363 P; 02.04.2007 EP 07006830
(43) Date of publication of application: 02.09.2009
(73) Proprietor: Telefónica Germany GmbH & Co. OHG, 80992 München (DE)
(72) Inventor: SCHRÖTER, Andreas, 40670 Meerbusch (DE)
(74) Representative: Herrmann, Uwe
(86) International application number: PCT/EP2007/010493
(87) International publication number: WO 2008/074396

(56) References cited:
- CN-A- 1 829 344
- US-A1- 2004 023 689

## Description

### FIELD OF THE INVENTION

The invention relates to a method of configuring a memory, such as a SIM card, for use in a mobile appliance equipped to communicate through a wireless network and to software for performing said method.

The invention also relates to a system for configuring a memory, such as a SIM card, for use in a mobile appliance equipped to communicate through a wireless network.

### BACKGROUND OF THE INVENTION

Wireless networks, in particular mobile phone networks, are provided by several network operators (NO), e.g. KPN, Vodafone, Orange, T-Mobile, etc. Over each network, an increasing number of service providers offers a wireless network service to a user or a group of users. Competition between service providers even using the same network is very strong. Therefore they have a need for differentiation in service, as well as for differentiation in tariff, and branding. The networks and/or the services provided by the providers are accessed under control of parameters, such as parameters that define which services may/may not be accessed (e.g. may the user use SMS or MMS services), alternative access and identification parameters, etc. For mobile appliances that use a mobile network, at least part of these parameters is stored in a non-volatile memory. The memory is on an electric circuit, referred to as a SIM card. A subscriber identity module (SIM) is a smartcard securely storing the key identifying a mobile subscriber. The SIM card also stores other subscriber details, such as the network and the provider to which the subscriber belongs. This is standardized to be displayed by some mobile appliances and gives the user the mental link to his provider independent from the used network and appliance. Security information is stored on the SIM card as well. The security information, such as cryptographic keys, is also used to encrypt voice and data transmissions, making it nearly impossible to listen in on calls. The card also contains storage space for storing the user-specific information, such as the user's phone number, a personal telephone number register (phone book: phone numbers and associated names). The user's phone book is commonly used to store the service provider specific Hotline number for customer care at production time of the SIM card, to make it as easy as possible to get the customer in contact with his provider. Storage is also foreseen for text messages. SIM cards can be programmed to display custom menus for personalized services and can even provide a runtime environment (e.g. Java) and access to the user interface of the mobile appliance (e.g. SIM Toolkit) for installing programs that support banking-, recharge-, call control-applications, etc .. SIMs are most widely used in GSM systems, but a compatible module is also used for GPRS, EDGE, UMTS UEs (USIM), IMS (ISIM), IOEN phones and other wireless networks. For example, USIM (UMTS Subscriber Identity Module) is the equivalent of a SIM card, but for WCDMA / UMTS (3G) phones. COMA, TOMA, and AMPS (analog) phones generally do not use SIM cards. The information is instead programmed directly into a memory in the phone. However, some COMA phones for China and Latin America use a very similar type of card called R-UIM (Removable User Identity Module).

The increased diversity in providers results in an increased diversity in SIMs, reflected in the various data elements which are stored on the SIM card. Nowadays, these differences are effected during production of the SIM cards. In itself this becomes more costly as the batches get smaller. Moreover, introducing a new service provider or a service specific for a group of user requires a significant time, since the production of SIMs first needs to be prepared. Thus, the current practice is not economical and is too slow.

US 2004 / 023 689 A1 discloses for example a method of configuring a memory for use in a mobile appliance equipped to communicate through a wireless network. The method starts the configuration upon hitting a trigger. The method includes the following steps: retrieving an identifier associated with the memory, using the mobile appliance to provide the identifier to a server via the wireless network, using the identifier to retrieve in the server associated configuration data for configuring the mobile appliance in a network-specific and/or provider specific manner, providing the configuration data from the server to the mobile appliance via the wireless network and storing the configuration data in the memory.

The EP 1 748 661 A1 discloses a mobile station and a parameter configuring system and method for the mobile station. The system includes a mobile station which is used to send the parameter configuration request to the database server, to receive the network parameters returned from the database server and to configure the current network parameters for the mobile station according to the obtained network parameters, and a database server which is used to store the network parameters, to query the network parameters according to the parameter configuration request from the mobile station and to send the queried network parameters to the mobile station.

### SUMMARY OF THE INVENTION

It would be advantageous to have an improved method and system to overcome the drawbacks of the background.

The reader is referred to the appended independent claims. Some preferred features are laid out in the dependent claims.

To better address this concern, in a first aspect of the disclosure a method is presented wherein a memory, such as a SIM card, is configured for use in a mobile appliance equipped to communicate through a wireless network, wherein the method includes upon a trigger for starting the configuration: retrieving an identifier; using the mobile appliance to provide the identifier to a server via the wireless network; in the server, using the identifier to retrieve associated configuration data for configuring the mobile appliance to operate in the wireless network in a network-specific and/or provider-specific manner; providing the configuration data from the server to the mobile appliance via the wireless network; and storing the configuration data in the memory.

According to the disclosure, at least part of the configuration (e.g. loading all parameters that differ from provider to provider) is done through the network. Basic and common parameters required to be able to use the services of the wireless network may be stored already at production time to minimize network load. Configuring the memory includes loading all parameters required to be able to use the services of the wireless network. According to the invention, the memory is associated with an identifier. The identifier may be stored in the memory during manufacturing. Based on the identifier, associated configuration data can be retrieved through the network. Depending on the network, parameters to access the network in a basic form may need to be stored in the memory card before the card is issued and used. Other parameters can be downloaded through the network. This means that it is much simpler to provide a large diversity in operational memories. It is much simpler to issue specific cards for specific service providers, also for relatively small service providers (e.g. banks, supermarkets, radio stations, exclusive niche markets, etc.). In fact, the memories can be produced without being fully configured. Consequently, batch-sizes can be kept large enough to be economical. Moreover, production times do not need to increase for smaller groups of customers per service provider. Additionally the risk of false produced memories is minimized and wrong configurations can be repaired over the network.

It will be appreciated that the method is very suited for being used for configuring memories, such as SIM cards, for use in mobile phone networks. Of course, the method can equally well be used for configuring the mobile appliance (terminal) itself in a provider specific way. This is particularly relevant if an equivalent of a SIM card is incorporated in the mobile appliance itself. Especially in this case additionally an appliance specific identifier (e.g. IMEI) can be retrieved and used to prepare a provider and appliance specific configuration of the memory. The technical means to securely and efficiently update SIM or appliance may differ. It will be appreciated that the method can equally well be used for configuring memories in mobile appliances for other type of wireless networks, such as IEEE 802.11networks.

The parameters are preferably stored in a non-volatile type of memory. The memory may be once writeable or multiple times writeable. If the identifier is stored in the memory itself, it is preferably stored in a permanent form, i.e. non-erasable and non-rewritable.

According to an aspect of the disclosure, the identifier uniquely identifies at least one of:
- the memory,
- the mobile appliance,
- a user of the mobile appliance,
- a service provider providing the wireless network service,
- a group of customers of the service provider.
It will be appreciated that also combinations of such identifiers may be used. For example, a first identifier may uniquely identify the memory and a second identifier may identify the service provider.

According to an aspect of the disclosure, the identifier is stored in the memory during manufacturing of the memory. In this way it is ensured that a specific post-configuration can take place. Since all produced memories could be equipped with a unique identifier, providing such an identifier during the production of the memory does not require a specific production process for small batches.

According to an aspect of the disclosure, the method includes establishing a secure communication channel via the wireless network. In this way, it can be ensured that approved memories get fully configured and the chance of fraudulent operations is reduced.

According to an aspect of the disclosure, the method includes determining whether the mobile appliance or the electric circuit is commissioned for a first time and upon determining a first commissioning, issuing said trigger. In this way, the memory gets configured automatically at the first occasion.

According to an aspect of the disclosure, the method includes determining that the configuration data associated with identifier has changed and upon determining a change, issuing said trigger. In this way, certain changes (e.g. using a different set of services) can be easily effected without requiring a replacement of the memory.

According to the disclosure, the identifier includes a customer identification number, the server stores information associating a customer identification number with a group of customers and/or service provider and stores the configuration data in association with the group and/or service provider.

According to an aspect of the disclosure, the method includes enabling a user to upload user-specific configuration data to the server; and incorporating the uploaded data in the configuration data.

### BRIEF DESCRIPTION OF THE DRAWINGS

These and other aspects of the invention will be elucidated hereinafter by reference to the drawings, wherein
Fig.1 shows a block diagram of an exemplary system in which the invention can be used with a removable memory;
Fig.2 shows a block diagram of an exemplary system with an integrated memory;
Fig.3 shows an exemplary arrangement of field in the memory; and
Fig.4 illustrates steps of the method according to the invention.

### DETAILED DESCRIPTION OF EMBODIMENTS

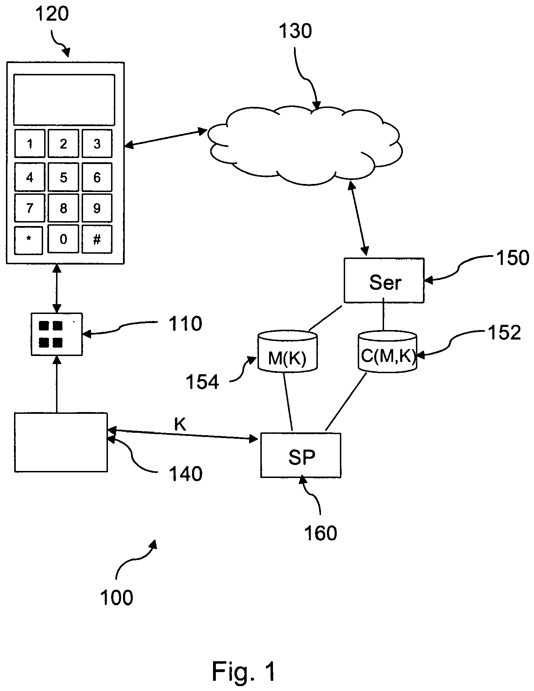

Fig.1 shows a block diagram of an exemplary system 100 in which the invention can be used. A memory 110 stores data for enabling a mobile appliance 120 to operate in a wireless network 130 in a network-specific and/or provider-specific manner. The memory 110 may take any suitable form. For example, the memory may be put on an electric circuit, such as a smart-card. The circuit may be of a removable type enabling the user to choose wireless networks services independent of the appliance 120, since the core parameters for the communication are stored in the memory 110 and the user can simply obtain a new appliance if he wishes to use the services of the network operator / service provider with a more advanced terminal without loosing configuration and branding of the provider. It will be appreciated that in this context a 'service provider' is the provider that the user regards as being his contact for providing the service over the wireless network. In fact, the service provider as seen by a user may just be a brand or brand partner of a much larger service provider or even of a network provider. A larger service provider can present different services/service levels to consumers in different forms using special brands. For example, a supermarket or bank may seem to provide a mobile phone/wireless data network service, where technically clearly the actual service is provided by a much larger network operator, service provider or virtual network enabler who may be fully hidden from the user.

The services to be chosen from by the user/customer may include GSM, GPRS, UMTS, SMS, MMS, etc. A choice of services may also distinguish between prepaid or subscription based service. The choice may also include if certain services are partly free or at a lower rate (e.g. the first 100 minutes phone calls nationally or free; above 100 minutes is payable). The services may be dependent on the location of the user (e.g. phone calls within 100 meters of the user's home are at a flat-rate or same rate as a fixed telephone line; phone calls within the country of residence of the user may be at a certain agreed rate, phone calls abroad may be at a higher rate). The services may also be dependent on the source/target of a connection (e.g. data download from http://www.service_provider.net/free_content is for free or at a special price. The services may also be dependent on whether the user communicates with another user that also has a relation with the same service provider or network provider. For example, phoning a user of the same service provider may be free or at a fixed rate, whereas phoning other user may be billable per time unit. For these services core communication parameters need to be stored in the memory 110.

In a preferred embodiment as shown in Fig.1, the memory 110 is a SIM-card or similar card typically used in mobile networks. The card can thus removably be mounted in the appliance 120.

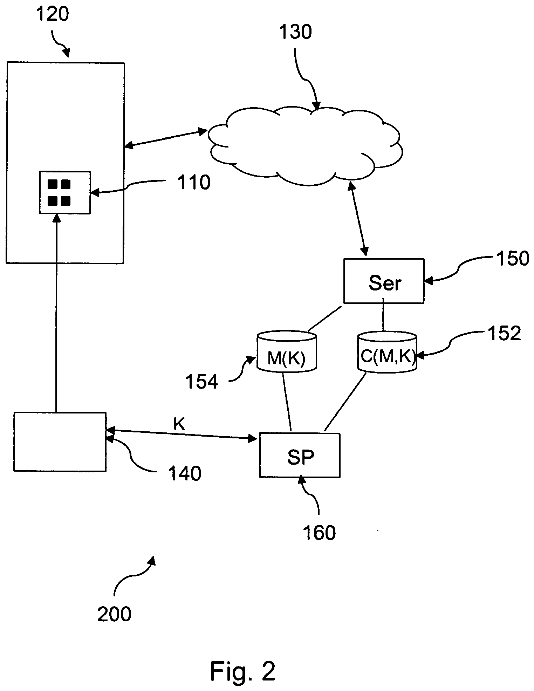

Fig.2 shows an alternative embodiment, wherein the memory is fixedly mounted in the appliance 120. In this latter case, in fact the invention not just configures the memory for communication and branding purposes, it actually can configure the entire appliance 120. It will be appreciated that also a combination of Fig.1 and Fig.2 is possible, wherein a first memory is of a removable type, like in Fig. 1 and a second memory is fixedly mounted in the appliance. In such a scenario, preferably the first memory is configured first to get the communication up and running. In a second phase, the second memory is then configured. As said before the technical means to securely and efficiently update SIM or appliance may differ. The remainder of the description will focus on the Fig.1 embodiment. It will be appreciated that a reference to a SIM also covers more general memories.

It will be appreciated that it is preferred that the parameters configured in the memory are maintained for longer periods, e.g. also after a power shortage in the appliance. Any suitable technique may be used for this; preferably at least part of the memory is non-volatile. It will also be appreciated that parameters will be configured through the wireless network and that thus at least part of the memory must at least be one-time writable. Preferably, the part of the memory that contains the configurable parameters is multiple times rewriteable (e.g. flash-type or similar type of rewriteable non-volatile memory). Some parameters may be stored in a permanent form in the memory. For example, a unique identifier K may be stored in the memory during the manufacturing process, shown as block 140. Any suitable technique may be used for this, for example such parameters may be stored during the semiconductor process in a pre-programmed ROM (Read-Only Memory). It may also after the semiconductor process be written in a post-production step for example using one-type writeable memory (e.g. by blowing memory fuses).

Parameters that have to be written at production time are mainly related to the basic and secure access of the network and the identification of the individual customer. For GSM/UMTS these are for example: first IMSI, Keys and parameters for used encryption algorithms and registration process, which have to be harmonized and provisioned with/in the other network elements. Further on the used update process for the secured and protected configuration of the memory might need keys or communication parameters as well.

Instead of only having a memory function, preferably also some processing functionality is present in the circuit. For example, functionality is present for authenticating the appliance and for establishing a secure communication over the wireless network (secure channel). Any suitable cryptographic technique may be used for this end. In itself, the processing functionality is known and is not part of this invention. However, at least some of the parameters for controlling such functionality may be configured over the air according to the invention. For example, it is possible to pre-install one or more programs on the SIM card, but to deactivate them by default and to foresee additional configuration parameters for provider specific customizations of the programs. E.g. a service menu can be offered, but it is either switched off or named according to the provider "My <Provider Name> Services" or a generic banking application is pre-installed, but configured according to the bank issuing the mobile service.

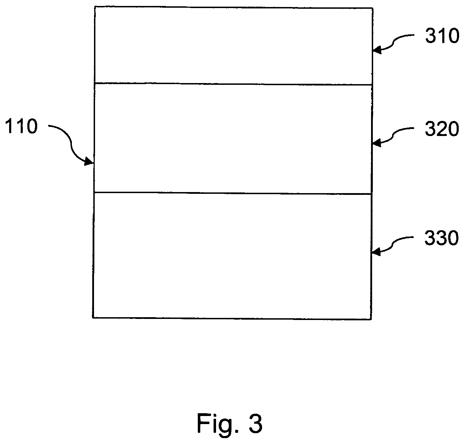

According to the invention, the memory 110 is produced by the process shown as 140 with at least two distinct sets of fields, as also shown in Fig.3. Fields shown as 310 are already configured during manufacturing, i.e. they contain data and are not (re-)configured later on. Fields 320 are initially empty or equipped with suitably chosen default values and are configured later-on. The values in 320 may be specific for the network provider or for the service provider. Shown are also fields 330 which may contain data specific for the user, e.g. a personal phone book. These are clearly not set during manufacturing and may be configured later on.

The memory 110 is associated with an identifier K. Preferably, the identifier is stored in the memory 110 during production and is thus in one of the fields 310. Alternatively, the identifier is stored in the appliance 120.

The mobile appliance is equipped to communicate through the wireless network 130 and is able to exchange communication parameters with a server 150 that is also connected to the wireless network 130. The mobile appliance may take any suitable form. For example, it may be a conventional mobile phone, a smart-phone/PDA, but may equally well be a portable PC (lap-top) equipped with wireless communication means. It may also be other mobile devices, such as for example a car where the car manufacturer has equipped the car with a mobile/wireless communication module (e.g. for reporting malfunctioning, accident, obtaining information during a journey, or for mobile communication) but no network-provider and/or service-provider was known at that moment. Particularly in such situations the communication module may be integrated in the car and less accessible. There may even be a unit integrated in the motor management system. Typically, the mobile appliance will have a user interface, such as a keyboard or touch-screen to receive input from the user and a display and/or speaker for providing output to the user. The mobile appliance will typically also include a processor (e.g. micro-controller and/or digital signal processor), program memory (e.g. ROM or non-volatile memory) and RAM.

The server may but need not be connected directly to the wireless network 130 but may be connected to a wired network (e.g. Internet) that may be coupled through a suitable device to the wireless network. Such equipment is all well-known and not part of the invention. The server may be implemented on any suitable platform; as such the server can be seen as a data processing device. The server stores configuration parameters. As such the server includes or has access to a storage 152, such as may be implemented on a hard disk. The storage may be structured, e.g. in the form of a database.

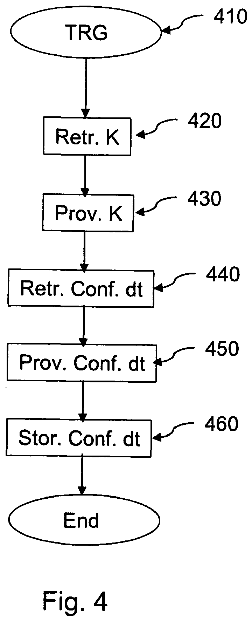

Fig.4 illustrates the method according to the invention. First the configuration process is triggered in step 410. This trigger may but need not come from the SIM card or the appliance when detecting a first usage situation or it may but need not be derived from the network detecting a first usage situation. After the trigger has been received, the identifier K associated with the memory 110 is retrieved in step 420. In step 430, the SIM card or the mobile appliance is used to provide the identifier to a server 150 via the wireless network 130. This may but need not be part of the trigger itself. In step 440, the server uses the identifier to retrieve associated configuration data for configuring the SIM card or mobile appliance to operate in the wireless network in a network-specific and/or provider-specific manner. Basically, the server 150 retrieves from the storage 152 configuration data associated with the identifier K. The configuration data may but need not to be individual - normally it will be user group specific and the user group is derived from the identifier K. In step 450, the server 150 provides the configuration data to the SIM card or mobile appliance 120 via the wireless network 130. In step 460, the mobile appliance 120 ensures that the configuration data is stored in the memory 110, e.g. in fields 320 or fields 330. The method may include technical means to ensure that this configuration data is only accepted when it was sent by server 150 and not from any other party. Any suitable technique may be used to this end, such as cryptographic authentication. Such techniques are well-known and are not described here any further.

The identifier is used to locate the configuration data in the storage 152. As such there is a one-to-one or many-to-one relationship between the identifier K and the associated configuration data. In an embodiment, the identifier K uniquely identifies the memory 110. For example, during production, as illustrated by block 140, each memory gets a unique identifier, e.g. by storing a sequential number in the memory. Instead of electronically storing the identifier in the memory, it may also be printed on it. The user then has to enter the number, e.g. through a user interface of the mobile appliance 120. In an embodiment, the identifier K uniquely identifies the mobile appliance 120. For example, the identifier may represent information such as a make and type of mobile appliance and a serial number of the appliance. The identifier may again be stored in the memory 110, in another memory of the appliance 120 or printed on a label or similar representation such that the user can enter it. In an embodiment, the identifier K uniquely identifies the user of the mobile appliance. For example, a user may be identified by name and address. Preferably, the appliance is then programmed to enable the user to enter such information. In an embodiment, the identifier K uniquely identifies a service provider providing the wireless network service. This is for example done during the production process 140, when the service provider is informed about all produced identifiers K belonging to him and/or the identifier K has a provider specific part. In the first case the identifiers may be stored in a database 154 relating to the associated provider identifier M. In this example the information of the service provider is stored as part of the production process and is as such not part of post-configuration according to the invention.

In an embodiment, the identifier K uniquely identifies a group of customers of the service provider. For example to specific groups of customers, the service provider provides specific services. This depends on the granularity of the business model. An example can be a co-operation with a publishing house that has a plurality of magazines for different target groups (Gournets, House&Garden, Young Communities, Golf, Yachting, ...) which may be handled as groups within one service provider.

It will be appreciated that also more than one identifier may be used; thus combinations of the above mentioned identifiers are possible. For example, an identifier K1 uniquely identifies the memory 110, an identifier K2 uniquely identifies a service provider and an identifier K3 uniquely identifies a customer/user or a group of customers. Some or all of these identifiers may be stored in or otherwise associated with the memory 110 or appliance 120 during manufacturing. In the remainder the situation of one identifier K will be elaborated. Persons skilled in the art can easily apply the same principles to situation of multiple identifiers (or an identifier with multiple sub-fields).

The server 150 receives the identifier K over-the-air from the mobile appliance 120. The server may then immediately access the storage 152 with parameters associated with K. However, preferably the server provides a configuration that is specific for a service provider. In Figs. 1 and 2 the service provider (or reseller) is shown as item 160. A storage 154 relates identifiers K to service providers. Each suitable relationship may be used. Mathematically seen, the server can establish for an identifier which service provider issued the memory/appliance, which can be represented by a function M(K), where M gives the service provider or brand (mark) as the user may see it. The server then retrieves from storage 152 the configuration parameters C(M,K) that are specific for the service provider M(K) (e.g. general communication settings for this provider) and specific settings for this identifier K (e.g. appliance specific services selected and settings for those services). As such the configuration parameters may depend on M and on K (which mathematically can be expressed as C(M, K), where C gives the stored configuration parameters).

Typically, a service provider (or reseller) shown as item 160 issues the memory 110 and/or the mobile appliance 120. At that moment, the service provider 160 knows the identifier K that has been communicated to the service provider by the manufacturer of the memory/appliance as described above. For example, the identifier is printed on it (or on a label) or the service provider electronically reads it from the memory or the service provider gets lists of produced memories/identifiers. The service provider controls which parameters have to be configured for the memory/appliance. The parameters may be specific for the services selected for the specific user/customer or may be specific for a group of customers to which the user/customer belongs. The service provider 160 may store the parameters in the storage 152. If the parameters are for a group, an additional mapping function G(K) may be given that for a specific identifier K gives the groups of customers to which K belongs. The parameters may then be given for M and G (so, C(M,G)), or if there is also still a memory/appliance-specific parameters part, the parameters may be given for M, G and K (so, C(M, G, K)).

Preferably, at least part of the configuration process through the wireless network takes place via a secure communication channel via the wireless network. It is well-known how secure communication can be established in a wireless network. All required parameters, such as encryption keys, may be stored already during manufacturing in the memory. The same or corresponding keys can be stored in the server 150 to establish the secure communication. However, certain parameters may also be supplied by the server 150 through the wireless network. This may be relevant e.g. for parameters that belong to an additional program on the appliance like a banking application which need bank specific security data. Dependent on the level of security needed and to simplify the production process or to avoid to send around keys to different parties, the keys can be generated and put on the appliance on the basis of an individual appliance data item (e.g. K) and a defined algorithm when the card is manufactured. The keys can than be generated and stored independently at the server as well on the basis of that individual appliance data item using the same algorithm..

Preferably, the configuration occurs when the mobile appliance 120 or the memory 110 is commissioned for a first time in the wireless network 130. The first commissioning may be detected in any suitable way. For example, the appliance 120 may store a parameter that indicates whether the appliance has already been configured. Similarly or additionally, the appliance 120 or memory 110 may store a parameter that indicates whether the memory has already been configured. If no configuration has yet taken place, the appliance may be programmed to automatically start the configuration process or enable the user to start the configuration process. The first commissioning of the appliance/memory is then the trigger of step 410. It is then the appliance 120 that takes the initiative to contact server 150, which is possible due to the basic configurations in 330. Alternatively, the trigger for the configuration is done by the wireless network. For example, when the appliance accesses the wireless network it registers itself. How this is done depends on the type of network, is normally standardized and not part of the invention. Normally in non license free networks, the network has to know about potential subscribers/appliances and a previous provisioning process is necessary. The registration centre can detect that the appliance is not yet fully configured and as such trigger the configuration process.

In an embodiment, the configuration data C(K) or C(M,K) associated with identifier K gets changed, for example by the customer obtaining different services from the service provider 160 (and the service provider updating C(M,K)) or the user even changing service provider (also resulting in an update of the information M(K) stored in storage 154) or even changing the group G(K). In such a situation, preferably the server 150 detects the change and issues the trigger of step 410. It will be appreciated that in this embodiment, a re-configuration occurs. It is not required to re-issue a memory or appliance.

In a scenario wherein the server triggers the configuration, the server may send a signal to the mobile appliance 120 to start the configuration process. Any suitable signal (e.g. special message) may be used that may trigger the configuration process automatically. Alternatively, a message is sent to the user (e.g. in textual form via SMS) to instruct the user to trigger the configuration process.

In an embodiment, the user is enabled to upload user-specific configuration data to a server. Again the server can be provider specific and its configuration can be part of C(M, G, K). The server stores the uploaded data in association with the identifier K in storage 152. The user may upload the data in any suitable form, e.g. through the wireless network directly from the appliance 120. In this scenario, the uploaded data may come from the memory 110 and/or the appliance 120. The uploaded data may include any data typically stored in such a memory and/or appliance, for example a personal phone book or calendar. The user may alternatively or additionally upload the personal data in other ways, e.g. through the internet from a personal computer. Preferably, the server 150 enables the user to review and/or edit personal data stored in the storage 152 before downloading it again to a mobile appliance of the user. For example, the server may provide a web-based interface that enables the user to define or modify a personal phone book. The personal data can then be downloaded during a configuration process as has been described above. The configuration process may then be triggered by the user on the appliance 120 or by the server 150. The uploaded personal data is incorporating in the configuration data in storage 152. In the memory 110 or appliance 120 it may be stored in field 330 as shown in Fig.4. The personal data may include: personal phone book, bookmarks (favorites) of web sites visited, history of web sites visited, personal or group calendar, preferred TV channels, pictures, videos, etc. This personal data may be shared between members/customers of the same provider or a larger community following the WEB 2.0 paradigma of user generated content. Additional means have to be implemented to allow for that.

The parameters that can be configured for a specific memory/appliance/customer/customer group may for example comprise one or more of the following:
- name of the operator of the communication system (i.e. the actual network operator);
- name of the customer's contractual partner (i.e. the perceived service provider; the brand);
- access parameter of the providers hotline or helpdesk
- access parameter for provider specific value added services
- entries in an address book or calendar;
- menus for user guidance and easy access to specific services;
- customization data (logo, wallpaper, welcome message, ...)
- access parameters for basic and advanced communication services (GPRS, MMS, WAP, Internet, E-mail, Bookmarks, Device Management, SyncML etc.) like preferred access technology (e.g. GSM vs. UMTS), Access Point Names (APNs), account login (username, password), URLs, etc.;
- preferred roaming partners (other networks, were at least a part of the services can be used with special advantages)
- alternative access and identification parameters for a communication system (e.g. to represent a business or a consumer customer without changing the appliance or to be able to register also at another operators network).
- additional application (pre-installed or downloaded) specific security parameter like keys or certificates
- additional application (pre-installed or downloaded) specific control and configuration parameters (switches, tables,...)
- additional appliations

As described above, the configuration parameters allow the customer easy access to ranges of services (for example internet, WAP, mobile TV, announcement services, SMS and MMS services) but may also be used to give access to digital content. The content may be specific for a customer (e.g. the personal phone book, personal calendar) but may also be for specific customer groups. For example, if the customer group is formed by the employees of a company, the content may include a company address book (or instead of the entire address book just a link to company DB), a company calendar or personal work calendar. For access to digital content, the configuration parameters may also include certificates (including key information) and parameters for DRM systems (Digital Rights Management). For individual customers or groups, the configurable parameters may also include a wallpaper to be displayed as background on the display of the mobile appliance 120, sounds (e.g. ring tones for various events, such as an incoming call, SMS, or email), specific menus for user guidance to be executed by appliance 120, executable applications (e.g. Java applets) executable on the processor of the appliance 120 (e.g. equipped with a Java virtual machine) .

The parameter may also include: roaming partners to give a customer best service level if he is out of reach of his home network. Dependent on the offered services this list of partners may vary from provider to provider (e.g. roaming partners with high quality UMTS networks versus cheep operators), SIM features (call control, ...) to establish e.g. call-back services in dedicated countries, smartcard web server pages to offer a sophisticated offline menu, configuration for dedicated device management systems to enable device specific update processes and data, Sync ML, to synchronize personal data with a personal or group specific database.

The alternative access and identification parameters can be updated after commissioning. A terminal can then be registered in another communication system.

In an embodiment, part of the configuration data can be displayed by the appliance 120. For example, if the name of the service provider or the telephone book is downloaded such data may be presentable to the user, e.g. on a display of the mobile appliance. Preferably, the memory 110 or appliance 120 is arranged to store certain parameters in such a way that the user can not retrieve them or at least not in a visible form. Certain parameters, such as cryptographic parameters, are preferably stored in a writeable form but are only readable by the secure modules. Such a secure module may be incorporated in the memory 110. If not, an authentication procedure may be followed to ensure that a module that needs to retrieve certain parameters is authorized to do so. Any suitable authentication procedure may be followed, for example based on a zero-knowledge algorithm. Any exchange of parameters then preferably does not take place in a plain-form but in a protected (encrypted form). Again any suitable form of protection may be used. In general most of the marketing related data (name, logo, helpdesk, menu, bookmarks, wallpaper, sounds, etc.) shall be visible or perceptible by the user/customer whereas the technical data (access parameters, keys, certificates, ...) shall be hidden. Most data should not be changeable by the user.

In an embodiment, the mobile appliance for use in the system includes a memory; means for communicating through a wireless network to a server; means for retrieving an identifier associated with the memory; means for providing the identifier to the server via the wireless network; means for receiving through the wireless network from the server configuration data for configuring the mobile appliance to operate in the wireless network in a network-specific and/or provider-specific manner; the configuration data being associated with the identifier; and means for storing the configuration data in the memory. It will be appreciated that it falls well within the skills of the person skilled in the art to implement the various means of the appliance using suitable hardware and/or software building blocks.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method. The program may be structured in any suitable form. For example, the program may include separate instructions or program modules for each of the steps of the method. It will be appreciated that the part of the method executed in the server form the server-part of the software. Software parts corresponding to the appliance and the memory role of the method form the appliance part of the software, which can be further divided as deemed suitable by the skilled person in a part executed in the memory and a part executed in the appliance.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method of configuring a memory (110) for use in a mobile appliance (120) equipped to communicate through a wireless network (130), the method comprising upon a trigger for starting the configuration :
retrieving, by the mobile appliance, an identifier associated with the memory (110);
providing, by the mobile appliance (120), the identifier to a server (150) via the wireless network (130);
accessing, by the server (150), a storage (152, 154) storing information associating the identifier with a group of customers and a service provider (160) to retrieve, using the identifier, configuration data in association with the group of customers and the service provider (160) for configuring the mobile appliance (120) to operate in the wireless network (130) in a network-specific, customer -group specific and service provider-specific manner; providing the configuration data from the server (150) to the mobile appliance (120) via the wireless network (130); and
the mobile appliance storing the configuration data in the memory (110).

2. A method as claimed in claim 1, wherein the identifier uniquely identifies at least one of:
- the memory (110),
- the mobile appliance (120),
- a user of the mobile appliance (120),
- a service provider (160) providing the wireless network (130) service,
- a group of customers of the service provider (160).

3. A method as claimed in claim 1, wherein the identifier is stored in the memory (110) during manufacturing of the memory (110).

4. A method as claimed in claim 1, including establishing a secure communication channel via the wireless network (130).

5. A method as claimed in claim 1, further including determining whether the mobile appliance (120) or the memory (110) is commissioned for a first time and upon determining a first commissioning, issuing said trigger.

6. A method as claimed in claim 1, further including determining that the configuration data associated with the identifier has changed and upon determining a change, issuing said trigger.

7. A method as claimed in claim 1, including enabling a user to upload user-specific configuration data to the server (150), and incorporating the uploaded data in the configuration data.

8. A system (100) for configuring a memory (110), whereby the system (100) includes
a mobile appliance (120) incorporating the memory (110) and including means for communicating through a wireless network (130); and a server (150) including a storage (152, 154), wherein the system is adapted to, upon a trigger for starting the configuration:
cause the mobile appliance to retrieve an identifier associated with the memory (110);
cause the mobile appliance (120) to provide the identifier to a server (150) via the wireless network (130);
cause the server (150) to access a storage (152) and the storage (152, 154) to store information associating the identifier with a group of customers and a service provider (160);
cause the server (150) to retrieve from the storage (152, 154), using the identifier, configuration data in association with the group of customers and the service provider (160) for configuring the mobile appliance (120) to operate in the wireless network (130) in a network-specific, customer-group specific and service provider-specific manner;
provide the configuration data from the server (150) to the mobile appliance (120) via the wireless network (130); and
cause the mobile appliance (120) to store the configuration data in the memory (110).

9. A computer program product for causing a processor to perform the steps of the method according to any of claims 1 to 7.

## Patentansprüche

1. Verfahren zum Konfigurieren eines Speichers (110) zur Verwendung in einem Mobilgerät (120), das zur Kommunikation über ein Drahtlosnetzwerk (130) eingerichtet ist, wobei das Verfahren bei einer Auslösung zum Starten der Konfiguration Folgendes umfasst:
Abrufen, durch das Mobilgerät, einer Kennung, die dem Speicher (110) zugeordnet ist;
Bereitstellen, durch das Mobilgerät (120), der Kennung an einen Server (150) über das Drahtlosnetzwerk (130);
Zugreifen, durch den Server (150), auf einen Speicher (152, 154), der Informationen speichert, die die Kennung (K) einer Gruppe von Kunden und
einem Dienstanbieter (160) zuordnen, um mithilfe der Kennung Konfigurationsdaten, die der Gruppe von Kunden und dem Dienstanbieter (160) zugeordnet sind, abzurufen, um das Mobilgerät (120) zu konfigurieren, in dem Drahtlosnetzwerk (130) in einer Netzwerk-spezifischen, Kundengruppen-spezifischen und Dienstanbieter-spezifischen Weise zu arbeiten;
Bereitstellen der Konfigurationsdaten von dem Server (150) über das Drahtlosnetzwerk (130) an das Mobilgerät (120); und
wobei das Mobilgerät die Konfigurationsdaten im Speicher (110) speichert.

2. Verfahren nach Anspruch 1, wobei die Kennung
- den Speicher (110) und/oder
- das Mobilgerät (120) und/oder
- einen Nutzer des Mobilgeräts (120) und/oder
- einen Dienstanbieter (160), der den Drahtlosnetzwerk (130) -Dienst bereitstellt und/oder
- eine Gruppe von Kunden des Dienstanbieters (160)
eindeutig identifiziert.

3. Verfahren nach Anspruch 1, wobei die Kennung während der Herstellung des Speichers (110) in dem Speicher (110) gespeichert wird.

4. Verfahren nach Anspruch 1, umfassend das Herstellen eines sicheren Kommunikationskanals über das Drahtlosnetzwerk (130).

5. Verfahren nach Anspruch 1, ferner umfassend das Bestimmen, ob das Mobilgerät (120) oder der Speicher (110) zum ersten Mal in Betrieb genommen wird, und Ausgeben des besagten Auslösers bei Feststellung eines Erstbetriebs.

6. Verfahren nach Anspruch 1, ferner umfassend das Bestimmen, dass sich die Konfigurationsdaten, die der Kennung zugeordnet sind, verändert haben, und Ausgeben des besagten Auslösers bei Feststellung einer Veränderung.

7. Verfahren nach Anspruch 1, wobei das Verfahren umfasst, es einem Nutzer zu ermöglichen, nutzerspezifische Konfigurationsdaten auf den Server hochzuladen (150), und Einbringen der hochgeladenen Daten in die Konfigurationsdaten.

8. System (100) zum Einrichten eines Speichers (110), wobei das System (100) aufweist:
ein Mobilgerät (120), in dem der Speicher (110) integriert ist, das Mittel zum Kommunizieren über ein Drahtlosnetzwerk (130) aufweist; und einen Server (150), der einen Speicher (152, 154) beinhaltet, wobei das System bei einem Auslöser zum Starten der Konfiguration eingerichtet ist, um:
das Mobilgerät zu veranlassen, eine Kennung abzurufen, die dem Speicher (110) zugeordnet ist;
das Mobilgerät (120) zu veranlassen, die Kennung über das Drahtlosnetzwerk (130) an einen Sever (150) bereitzustellen;
den Server (150) zu veranlassen, auf einen Speicher (152) zuzugreifen, und den Speicher (152, 154) zu veranlassen, Informationen zu speichern, die die Kennung einer Gruppe von Kunden und einem Dienstanbieter (160) zuordnen;
den Server (150) zu veranlassen, mithilfe der Kennung Konfigurationsdaten aus dem Speicher (152, 154) abzurufen, die der Gruppe von Kunden und dem Dienstanbieter (160) zugeordnet sind, um das Mobilgerät (120) zu konfigurieren, in dem Drahtlosnetzwerk (130) in einer Netzwerk-spezifischen, Kundengruppen-spezifischen und Dienstanbieter-spezifischen Weise zu arbeiten;
Bereitstellen der Konfigurationsdaten von dem Server (150) über das Drahtlosnetzwerk (130) an das Mobilgerät (120); und
die Mobilgerät (120) zu veranlassen, die Konfigurationsdaten in dem Speicher (110) zu speichern.

9. Computerprogrammprodukt, um einen Prozessor zu veranlassen, die Schritte des Verfahrens nach einem der Ansprüche 1 bis 7 durchzuführen.

## Revendications

1. Procédé destiné à configurer une mémoire (110) à utiliser dans un appareil mobile (120) équipé pour communiquer par le biais d'un réseau sans fil (130), le procédé comprenant, via un déclencheur permettant le démarrage de la configuration, les étapes consistant à :
récupérer, par l'appareil mobile, un identifiant associé à la mémoire (110) ;
fournir, par l'appareil mobile (120), l'identifiant à un serveur (150) via le réseau sans fil (130) ;
accéder, par le serveur (150), à un stockage (152, 154) stockant des informations associant l'identifiant à un groupe d'utilisateurs et un fournisseur de services (160) à récupérer, à l'aide des données de configuration d'identifiant en association avec le groupe de clients et le fournisseur de services (160) pour configurer l'appareil mobile (120) pour qu'il fonctionne dans le réseau sans fil (130) d'une manière spécifique au réseau, spécifique au groupe de clients, et spécifique au fournisseur de services ;
fournir les données de configuration du serveur (150) à l'appareil mobile (120) via le réseau sans fil (130), et
l'appareil mobile stockant les données de configuration dans la mémoire (110).

2. Procédé selon la revendication 1, dans lequel l'identifiant identifie uniquement au moins un des éléments suivants :
- la mémoire (110) ;
- l'appareil mobile (120) ;
- un utilisateur de l'appareil mobile (120) ;
- un fournisseur de services (160) fournissant le service de réseau sans fil (130), et
- un groupe de clients du fournisseur de services (160).

3. Procédé selon la revendication 1, dans lequel l'identifiant est stocké dans la mémoire (110) lors de la fabrication de la mémoire (110).

4. Procédé selon la revendication 1, incluant l'établissement d'une voie de communication sécurisée via le réseau sans fil (130).

5. Procédé selon la revendication 1, incluant en outre la détermination de si oui ou non l'appareil mobile (120) ou la mémoire (110) est mis en service pour une première fois, et lors de la détermination d'une première mise en service, l'émission dudit déclencheur.

6. Procédé selon la revendication 1, incluant en outre la détermination que les données de configuration associées à l'identifiant ont changé, et lors de la détermination d'un changement, l'émission dudit déclencheur.

7. Procédé selon la revendication 1, incluant la capacité pour un utilisateur de télécharger des données de configuration spécifiques à l'utilisateur vers le serveur (150), et l'intégration des données téléchargées dans les données de configuration.

8. Système (100) destiné à configurer une mémoire (110), attendu que le système (100) inclut un appareil mobile (120) intégrant la mémoire (110) et incluant des moyens pour communiquer par le biais d'un réseau sans fil (130), et un serveur (150) incluant un stockage (152, 154), dans lequel le système est apte, via un déclencheur permettant le démarrage de la configuration, à :
faire en sorte que l'appareil mobile récupère un identifiant associé à la mémoire (110) ;
faire en sorte que l'appareil mobile (120) fournisse l'identifiant à un serveur (150) via le réseau sans fil (130) ;
faire en sorte que le serveur (150) accède à un stockage (152) et que le stockage (152, 154) stocke des informations associant l'identifiant à un groupe d'utilisateurs et un fournisseur de services (160) ;
faire en sorte que le serveur (150) récupère du stockage (152, 154), à l'aide de l'identifiant, les données de configuration en association avec le groupe de clients et le fournisseur de services (160) pour configurer l'appareil mobile (120) pour qu'il fonctionne dans le réseau sans fil (130) d'une manière spécifique au réseau, spécifique au groupe de clients, et spécifique au fournisseur de services ;
fournir les données de configuration du serveur (150) à l'appareil mobile (120) via le réseau sans fil (130), et
faire en sorte que l'appareil mobile (120) stocke les données de configuration dans la mémoire (110).

9. Produit de type programme informatique destiné à faire en sorte qu'un processeur exécute les étapes du procédé selon l'une quelconque des revendications 1 à 7.
